# FASCICULE DE BREVET EUROPEEN

(11) **EP 0 418 127 B1**
(45) Date de publication et mention de la délivrance du brevet: **07.12.1994**
(21) Numéro de dépôt: 90402466.8
(22) Date de dépôt: 07.09.1990
(51) Int. Cl.: G11B 5/31, G11B 5/23

(54) **Procédé de réalisation des pièces polaires et de l'entrefer de têtes magnétiques en couches minces pour application informatique audio ou vidéo**
Herstellungsverfahren von polaren Stücken und der Spalte von Dünnschicht-Magnetköpfen zur Informationsverarbeitungs-, Audio- oder Videoverwendung
Process for producing pole pieces and gap of thin layer magnetic heads for information processing, audio or video

(30) Priorité: 12.09.1989 FR 8911892
(43) Date de publication de la demande: 20.03.1991
(73) Titulaire: COMPAGNIE EUROPEENNE DE COMPOSANTS ELECTRONIQUES LCC, F-92402 Courbevoie (FR)
(72) Inventeur: Deroux-Dauphin, Patrice, F-92045 Paris la Défense (FR)
(74) Mandataire: Ruellan-Lemonnier, Brigitte

(56) Documents cités:
- EP-A- 0 140 524
- PATENT ABSTRACTS OF JAPAN vol. 7, no. 164 (P-211)(1309) 19 juillet 1983,& JP-A-58 070416 (MATSUSHITA DENKI SANGYO K.K.) 26 avril 1983,
- IBM TECHNICAL DISCLOSURE BULLETIN. vol. 17, no. 11, avril 1975, ARMONK,N.Y.,USApages 3446 - 3449; ROMANKIW et al.: "BATCH FABRICATION OF KEYHOLE TYPE MAGNETICRECORDING HEADS"

## Description

La présente invention a pour objet un procédé de réalisation de têtes magnétiques en couches minces et à structure planaire. Elle concerne en particulier la réalisation des pièces polaires et de l'entrefer de têtes d'enregistrement et de lecture pour différentes applications telles que l'informatique, l'audio ou la vidéo.

Selon les types de têtes développées, les applications et les performances désirées, différentes technologies peuvent être mises en oeuvre pour réaliser l'entrefer et les pièces polaires. Un procédé de réalisation de têtes magnétiques en couches minces à partir d'un substrat magnétique est décrit dans la demande de brevet européenne EP-A-0140524. La demande de brevet EP 262 028 divulgue un procédé de réalisation de têtes magnétiques en couches minces et à structure planaire qui permet d'obtenir un entrefer étroit formé d'une couche amagnétique et des pièces polaires de forme telle qu'elles conduisent à une concentration de flux au voisinage de l'entrefer et offrent une faible surface sans protection. Ce procédé met en oeuvre des opérations de dépôt de couches minces et de gravure qui sont usuelles dans la technologie des circuits intégrés ainsi que des opérations de dépôt électrolytique de diverses couches magnétiques.

Le procédé selon EP 262 028 permet la fabrication de têtes magnétiques qui présentent les inconvénients suivants.

La hauteur des pièces polaires est limitée à une valeur maximale d'environ 4 à 5 µm. Ce procédé ne peut donc pas être utilisé à la réalisation de têtes vidéo ou DAT (Digital Audio Tape) qui, en cours de fonctionnement, sont soumises à une usure importante et nécessitent donc une hauteur des pièces polaires plus importante (de l'ordre de 15 µm).

L'entrefer (ou espaceur) est relativement fragile. En effet, l'entrefer est rapporté sur un support et, bien qu'étant de même nature que le support, il existe un point de fragilisation à l'interface entre l'entrefer et le support.

La perpendicularité de l'espaceur est difficile à maîtriser pour des hauteurs importantes (4 à 5 µm).

L'entrefer étant obtenu par dépôt d'un matériau minéral et par un procédé approprié à ce matériau, il résulte que l'épaisseur de l'entrefer est limitée à des valeurs comprises entre 0,3 µm et 2 µm.

Pour pallier ces inconvénients, la présente invention propose un procédé qui permet, par l'utilisation des techniques de la microélectronique, de réaliser des entrefers d'épaisseur variable entre 0,1 µm et une dizaine de µm et des hauteurs de pièces polaires variables entre 0,1 µm et une quinzaine de µm, avec un très bon contrôle de l'épaisseur et de la hauteur de l'espaceur et une très bonne rigidité mécanique de celui-ci. Cette tenue mécanique remarquable vient du fait que dans le cas de l'invention, l'espaceur est réalisé dans la masse et non rapporté comme dans EP 262 028.

L'invention a donc pour objet un procédé de réalisation des pièces polaires et de l'entrefer de têtes magnétiques en couches minces et à structure planaire, à partir d'un substrat en silicium, caractérisé en ce qu'il comprend les étapes suivantes :
a) formation d'une couche isolante sur un substrat en silicium,
b) dépôt d'une couche métallique sur la couche isolante,
c) dépôt d'une couche de résine de masquage sur la couche métallique,
d) gravure du substrat recouvert de la couche isolante et de la couche métallique pour former des caissons encadrant une poutrelle de largeur déterminée,
e) élimination des restes de la couche métallique gravée à l'étape précédente,
f) oxydation thermique du substrat gravé pour développer une couche d'oxyde de silicium permettant d'ajuster ladite poutrelle pour obtenir l'entrefer désiré,
g) gravure sélective de la couche d'oxyde développée à l'étape précédente afin d'éliminer les parties de cette couche situées au fond des caissons,
h) dépôt d'une couche conductrice au fond des calssons,
i) dépôt électrolytique d'un matériau magnétique dans les caissons,
j) élimination des restes de la couche isolante déposée initialement sur le substrat.

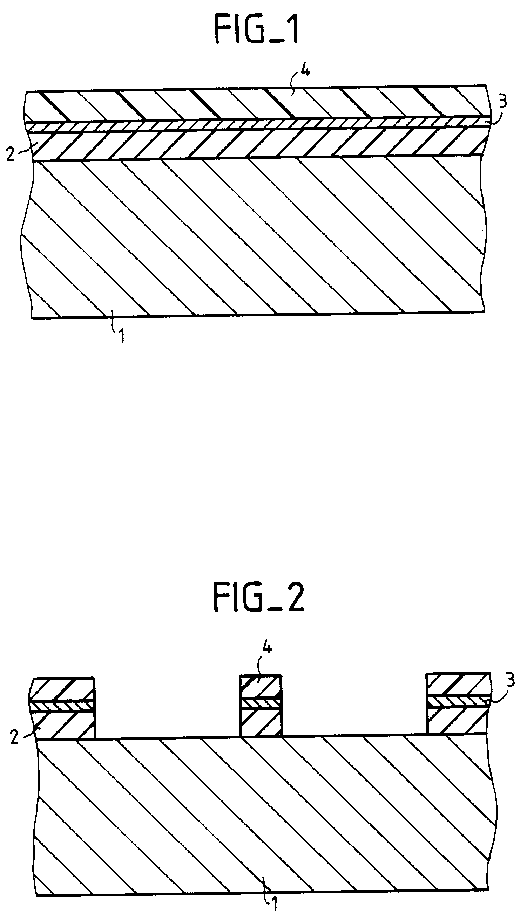

L'invention sera mieux comprise et d'autres avantages apparaîtront à la lecture de la description qui va suivre, donnée à titre non limitatif, et grâce aux figures 1 à 10 qui illustrent les différentes étapes de fabrication du procédé selon l'invention.

Selon l'invention, on réalise les pièces polaires et l'entrefer à partir d'un substrat en silicium que l'on traitera de préférence de manière à prévoir la formation d'un nombre important de têtes magnétiques à partir du même substrat. Le substrat peut avoir été traité de façon qu'il soit déjà équipé de bobinages électriques. Il peut au contraire être brut auquel cas les pièces polaires et l'entrefer seront reportés sur un circuit magnétique de fermeture équipé d'un ou de deux bobinages.

La figure 1 représente un substrat 1 en silicium sur lequel on a déposé une couche isolante 2. Cette couche isolante peut avoir été formée par oxydation thermique du substrat de silicium. Elle peut aussi avoir été déposée par voie chimique (CVD), méthode qui se prête bien au dépôt d'oxyde ou de nitrure de silicium. La couche isolante 2 peut avoir une épaisseur comprise entre 0,5 et 5 µm.

Sur la couche isolante 2, on dépose une couche métallique 3. Ce peut être une couche de tungstène déposée par pulvérisation cathodique et d'épaisseur comprise entre 0,5 et 3 µm.

Sur la couche métallique 3, on dépose une couche de résine de masquage 4.

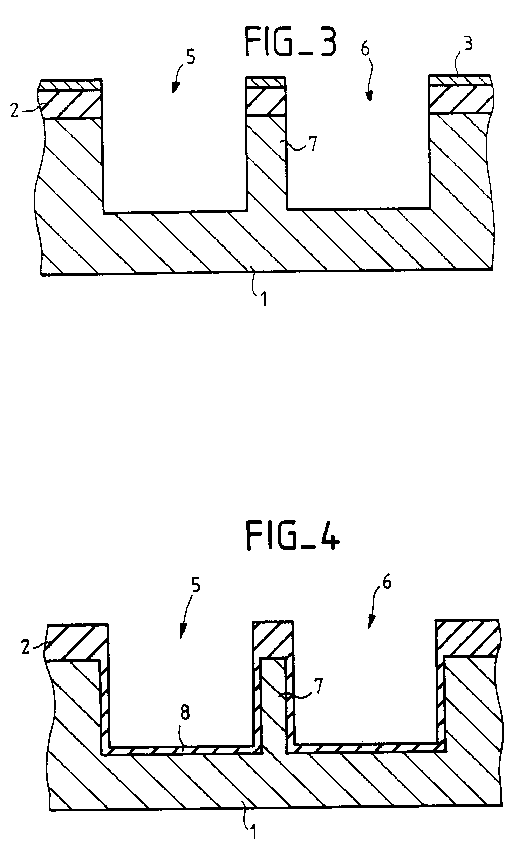

La couche de résine 4 sert, après masquage et insolation à définir les pièces polaires et l'entrefer. La figure 2 représente le substrat 1 à un stade où la couche métallique 3 et la couche isolante 2 ont été gravées. La figure 3 représente le substrat 1 en fin de gravure. Deux caissons 5 et 6 ont été réalisés définissant une poutrelle 7 à partir de laquelle sera réalisé l'entrefer. Le masque métallique constitué par la couche 3 gravée a pour but principal d'obtenir une gravure anisotrope de la couche isolante 2, puis une gravure anisotrope du substrat 1. La gravure se fait par des techniques connues de l'homme du métier, par exemple dans un réacteur de gravure plasma.

Après ces opérations, on élimine les restes du masque métallique par gravure chimique.

La poutrelle 7 a une épaisseur prédéterminée ainsi que les dimensions des caissons 5 et 6 qui l'encadrent. Cette épaisseur peut être satisfaisante pour l'entrefer prévu. Dans certains cas cependant, en particulier lorsque l'on désire des épaisseurs d'entrefer très faibles, on peut être amené à prévoir les deux étapes supplémentaires suivantes.

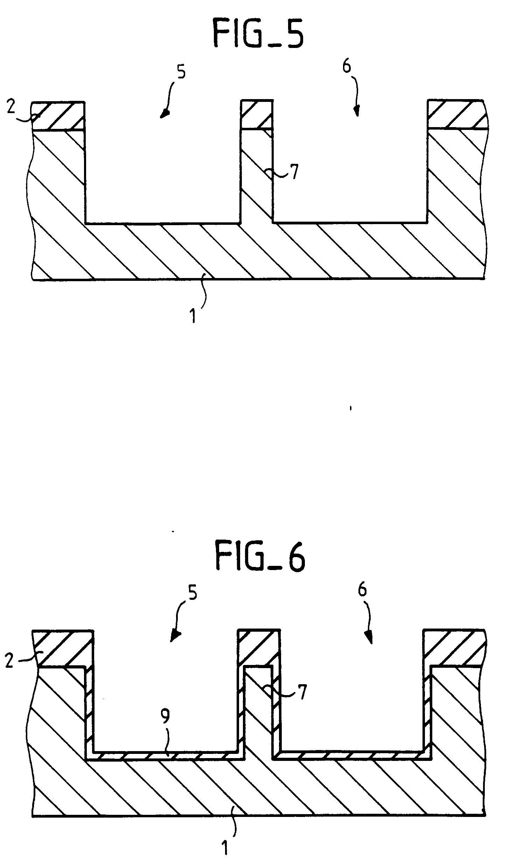

Une première étape, illustrée par la figure 4, consiste à provoquer la formation, par oxydation thermique, d'une couche superficielle 8 d'oxyde de silicium. L'épaisseur de la couche d'oxyde 8 est déterminée en fonction de l'épaisseur d'entrefer désirée. Cette méthode a l'avantage de la précision puisqu'on sait très bien contrôler la croissance de l'oxyde thermique. Par exemple, si on (désire un entrefer définitif de 0,4 µm d'épaisseur, l'épaisseur de la poutrelle 7 peut être à l'origine de 1,2 µm (ce qui est facile à réaliser par lithographie), l'épaisseur de la couche superficielle 8 peut être de 0,4 µm. Ainsi, lorsqu'on élimine la couche d'oxyde 8 au cours d'une deuxième étape, on obtient un entrefer de la largeur désirée, c'est-à-dire 0,4 µm. La figure 5 illustre ce stade du procédé.

On procède ensuite à une oxydation thermique qui vise un double objectif : définir l'épaisseur exacte de l'entrefer définitif et créer un isolement latéral. On développe ainsi sur le substrat gravé une couche d'oxyde de silicium 9 comme le montre la figure 6.

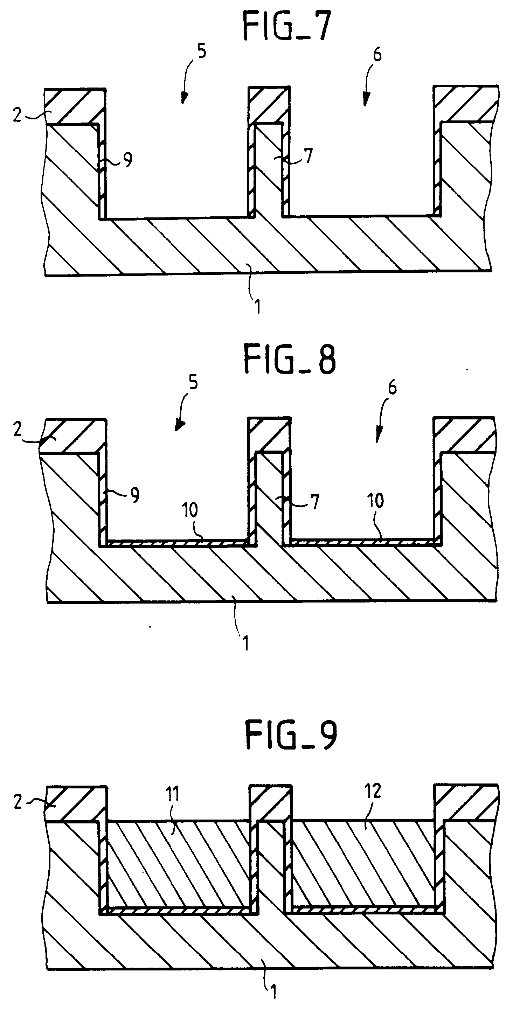

On effectue alors une gravure sélective de la couche d'oxyde 9, par exemple une gravure par plasma de façon à dégager le fond des caissons 5 et 6. La gravure sélective fait qu'on élimine l'oxyde situé au fond des caissons sans toucher à la couche d'oxyde des parois. C'est ce que montre la figure 7.

L'étape suivante consiste à déposer une couche conductrice au fond des calssons 5 et 6. Pour ce faire, on peut procéder de la manière suivante. On dépose une couche de métal, par exemple une couche de 0,1 µm d'épaisseur de nickel (ou encore de chrome ou de tantale) par pulvérisation cathodique. Grâce à un recuit, il se forme à l'interface silicium-nickel, c'est-à-dire au fond des caissons 5 et 6, un siliciure de nickel. L'épaisseur de siliciure de nickel ainsi constitué dépend de la température et de la durée du recuit. A l'interface entre l'oxyde de siliciure et le nickel, il ne peut se former du siliciure. On grave ensuite chimiquement la couche de nickel, ce qui permet d'obtenir une couche conductrice 10 de siliciure de nickel dans le fond des caissons. C'est ce que représente la figure 8 où la couche 10 constitue une couche support du matériau magnétique qui viendra combler les caissons 5 et 6. Par électrolyse, on peut ainsi déposer par exemple un alliage fer-nickel à partir d'une phase liquide qui contient des ions de ces métaux, le substrat de silicium servant à assurer la liaison électrique avec la couche support 10. La couche de siliciure permet une meilleure adhérence des pièces polaires que sur le silicium pur. La figure 9 illustre ce stade du procédé où les pièces polaires sont représentées sous les références 11 et 12.

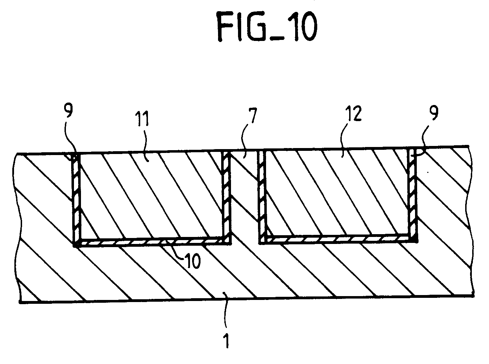

Il suffit ensuite de procéder à une gravure des proéminences d'oxyde de silicium pour obtenir la structure représentée à la figure 10.

Le procédé selon l'invention se prête particulièrement bien pour les têtes magnétiques pour application informatique où de faibles largeurs de piste sont nécessaires. En effet, pour ce type de tête, les champs démagnétisants deviennent très importants et on devient alors, lors de l'élaboration de la tête, très dépendant de l'anisotropie de forme de celle-ci. Il est intéressant dans ce cas de pouvoir faire une pièce polaire plus épaisse et de prévoir l'entrefer en conséquence.

Le procédé selon l'invention se prête aussi particulièrement bien aux têtes pour application bandes magnétiques qui nécessitent une pièce polaire très épaisse (environ 5 à 30 µm).

## Revendications

1. Procédé de réalisation des pièces polaires et de l'entrefer de têtes magnétiques en couches minces pour application informatique audio ou vidéo, à partir d'un substrat en silicium, caractérisé en ce qu'il comprend les étapes suivantes :
a) formation d'une couche isolante (2) sur un substrat en silicium (1),
b) dépôt d'une couche métallique (3) sur la couche isolante (2),
c) dépôt d'une couche de résine de masquage (4) sur la couche métallique (3),
d) gravure du substrat recouvert de la couche isolante (2) et de la couche métallique (3) pour former des caissons (5, 6) encadrant une poutrelle (7) de largeur déterminée,
e) élimination des restes de la couche métallique (3) gravée à l'étape précédente,
f) oxydation thermique du substrat gravé pour développer une couche d'oxyde de silicium (9) permettant d'ajuster ladite poutrelle (7) pour obtenir l'entrefer désiré,
g) gravure sélective de la couche d'oxyde développée à l'étape précédente afin d'éliminer les parties de cette couche situées au fond des caissons (5,6),
h) dépôt d'une couche conductrice (10) au fond des caissons (5,6),
i) dépôt électrolytique d'un matériau magnétique (11,12) dans les caissons (5,6),
j) élimination des restes de la couche isolante (2) déposée initialement sur le substrat (1).

2. Procédé selon la revendication 1, caractérisé en ce qu'il comprend entre les étapes e) et f) les deux étapes supplémentaires suivantes :
- formation, par oxydation thermique, d'une couche d'oxyde de silicium d'épaisseur déterminée en vue de limiter la largeur de la poutrelle au silicium restant,
- élimination de la couche d'oxyde de silicium précédemment formée.

## Patentansprüche

1. Verfahren zur Herstellung der Polstücke und des Magnetspalts von Dünnschicht-Magnetköpfen für eine Anwendung in der Informatik, bei der Ton- oder Bildaufzeichnung, beginnend mit einem Siliziumsubstrat, dadurch gekennzeichnet, daß das Verfahren folgende Schritte aufweist:
a) eine isolierende Schicht (2) wird auf einem Siliziumsubstrat (1) ausgebildet,
b) eine Metallschicht (3) wird auf die isolierende Schicht (2) aufgebracht,
c) eine Schicht aus Maskierungsharz (4) wird auf die Metallschicht (3) aufgebracht,
d) das ,mit der isolierenden Schicht (2) und der Metallschicht (3) bedeckte Substrat wird selektiv geätzt, um Vertiefungen (5, 6) zu beiden Seiten einer Säule (7) einer bestimmten Breite zu bilden,
e) die Reste der im vorhergehenden Verfahrensschritt geätzten Metallschicht (3) werden entfernt,
f) das geätzte Substrat wird thermisch oxidiert, um eine Schicht aus Siliziumoxid (9) zu entwickeln, die eine Justierung der Säule (7) erlaubt, um den gewünschten Magnetspalt zu erhalten,
g) die entwickelte Oxidschicht des vorhergehenden Verfahrensschritts wird selektiv abgeätzt, um die Bereiche dieser Schicht zu entfernen, die sich am Grund der Vertiefungen (5, 6) befinden,
h) eine leitende Schicht (10) wird auf den Grund der Vertiefungen (5, 6) aufgebracht,
i) ein magnetisches Material (11, 12) wird auf elektrolytischem Weg in die Vertiefungen (5, 6) eingebracht,
j) die Reste der isolierenden Schicht (2), die ursprünglich auf das Substrat (1) aufgebracht wurde, werden entfernt.

2. Verfahren nach Anspruch 1, dadurch gekennzeichnet, daß zwischen den Verfahrensschritten e) und f) die beiden folgenden zusätzlichen Verfahrensschritte eingefügt werden:
- durch thermische Oxidation wird eine Siliziumoxidschicht einer bestimmten Dicke gebildet, um die Breite der verbleibenden Säule aus Silizium zu begrenzen,
- die vorher gebildete Siliziumoxidschicht wird entfernt.

## Claims

1. Method of production of the pole pieces and the air gap of thin-film magnetic heads for computer, audio or video application, starting from a silicon substrate, characterized in that it comprises the following steps:
a) formation of an insulating layer (2) on a silicon substrate (1),
b) deposition of a metal layer (3) on the insulating layer (2),
c) deposition of a masking resin layer (4) on the metal layer (3),
d) etching of the substrate covered with the insulating layer (2) and the metal layer (3) in order to form boxes (5,6) framing a bar (7) of defined width,
e) removal of the remainder of the metal layer (3) etched in the preceding step,
f) thermal oxidation of the etched substrate in order to develop a silicon oxide layer (9) making it possible to adjust the said bar (7) in order to obtain the desired air gap,
g) selected etching of the oxide layer developed in the preceding step in order to remove the parts of this layer located at the bottom of the boxes (5,6),
h) deposition of a conductive layer (10) at the bottom of the boxes (5,6),
i) electrolytic deposition of a magnetic material (11,12) in the boxes (5,6),
j) removal of the remainder of the insulating layer (2) initially deposited on the substrate (1).

2. Method according to Claim 1, characterized in that it comprises, between steps e) and f), the following two additional steps:
- formation, by thermal oxidation, of a silicon oxide layer with defined thickness with a view to limiting the width of the bar to the remaining silicon,
- removal of the silicon oxide layer previously formed.
